# EUROPEAN PATENT SPECIFICATION

(11) **EP 0 503 551 B1**
(45) Date of publication and mention of the grant of the patent: **13.01.1999**
(21) Application number: 92104050.7
(22) Date of filing: 10.03.1992
(51) Int. Cl.: C08L 69/00, C23C 18/20

(54) **A resin composition for plating**
Harzzusammensetzung zur Plattierung
Composition de résine pour revêtement métallique

(30) Priority: 13.03.1991 JP 72121/91
(43) Date of publication of application: 16.09.1992
(73) Proprietor: IDEMITSU PETROCHEMICAL CO., LTD., Minato-ku, Tokyo (JP)
(72) Inventor: Tanaka, Kenji, c/o Idemitsu Petrochemical Co. Ltd., Ichihara-shi, Chiba-ken (JP)
(74) Representative: Türk, Gille, Hrabal

(56) References cited:
- EP-A- 0 183 167
- EP-A- 0 191 942
- FR-A- 1 318 121
- US-A- 4 305 856

## Description

### BACKGROUND OF THE INVENTION

### 1. Field of the Invention

The present invention relates to a use of a plated product made from a resin composition which is used as the door handle and door knob of a car.

### 2. Description of Related Arts

In general, commercially plated resin products are mainly made of an acrylonitrile-butadiene-styrene resin (hereinafter referred to as an ABS resin) and thus the plating units for an ABS resin are widely used. Since the ABS resins or the materials to be plated in the ABS plating unit can be etched by only chromic acid/sulfuric acid mixture and can be treated by only one rack through the whole process, they have the advantages that the treatment and investment costs for the equipment are low due to the simple process.

Polyacetals, nylons and polycarbonates are put into practical use as the door handle and door knob of a car made of plated resin. Among them, polycarbonates are the most promising polymer because of its practical high strength.

Thus, as a polycarbonate plating material used for parts of a high impact strength such as the door handle or door knob of a car, there are known nowadays two kinds of compositions, that is, a polycarbonate/ABS resin composition and a polycarbonate/MBS (methylmethacrylate-butadiene-styrene copolymer) resin composition. Each of them has merits and demerits as follows.
(a) Polycarbonate/ABS resin composition: A blend composition of approximately 50/50% by weight is generally used. It has the merit that a conventional plating unit for conventional ABS resins can be used, but has the demerit that the heat resistivity and the mechanical strength are not satisfactory. If the proportion of the polycarbonate component is increased simply for improving the mechanical strength and heat resisting, the plating performances, e,g. plating deposition stability and adhesivity, are decreased to be of no practical use.
(b) Polycarbonate/MBS resin composition: A blend composition of approximately 95/5% by weight is generally used. It has the merit of providing high mechanical strength, but has the following demerits. The plating is not possible in the plating unit for ABS resins. The multi etching stages using two or three kinds of chemical agents are required and thus the treatment process is lengthened. This composition has also the demerits that the rack is necessary to be changed, the workability is deteriorated and the impact strength tends to be markedly decreased.

US-A-4,305,856 relates to a thermoplastic resin composition excellent in heat cycle property which comprises 100 parts by weight of a polycarbonate resin blended or not with an ABS type resin in an amount of not more than 95% by weight based on the combined weight of the polycarbonate resin and the ABS type resin and 0.05 to 3.0 parts by weight of an organo-silicon compound.

FR-A-1318121 is related to the improvement of the thermoplasticity of PC/ABS compositions and describes compositions comprising 90-30 pts./wt. of polycarbonate and 10-70 pts./wt. of ABS-copolymers.

### SUMMARY OF THE INVENTION

An object of the present invention is to provide use of plated products for the door handle of a car, as defined in claim 1.

### DESCRIPTION OF THE PREFERRED EMBODIMENT

The inventors, considering the aforementioned situations, have intensively studied to develop a resin composition having the advantages of the both resins, that is, the capability of plating in a conventional ABS plating line and the high mechanical strength as a polycarbonate resin. The inventors discovered that the aforementioned object is attainable by blending a specified ABS resin and a polycarbonate resin in the specified proportion and that the present invention is achieved from the above knowledge. The resin composition used for plating is defined in claim 1.

The resin composition for plating used in accordance to the present invention is a composition comprising substantially polycarbonate resin and ABS resin (hereinafter referred to as PC/ABS composition) as mentioned above. In the PC/ABS resin composition, the polycarbonate resin as the main component is a polymer having the repeating unit of the general formula [I]. 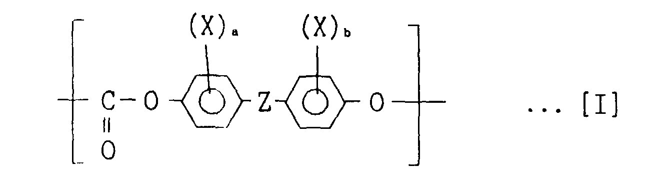 wherein Z represents a single bond, an alkylene group having 1 - 8 carbon atoms, an alkylidene group having 2 - 8 carbon atoms, a cycloalkylene group having 5 - 15 carbon atoms, a cycloalkylidene group having 5 - 15 carbon atoms, SO₂, SO, O, CO or a group represented by formula [II]. 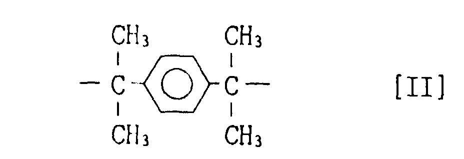 where X represents hydrogen, chlorine, bromine or a saturated alkyl group having 1 - 8 carbon atoms, and a and b are an integer of 0 - 4, respectively.

The above polycarbonate resin is manufactured by so-called solvent method, that is, by reacting a dihydric phenol and a carbonate precursor such as phosgene in the presence of a known acid acceptor and a molecular weight modifier or by so-called ester exchange method, that is, by ester-exchanging a dihydric phenol and a carbonate precursor such as a diphenylcarbonate.

The preferable dihydric phenol is bisphenols, and the particularly preferable one is 2,2-bis(4-hydroxyphenyl)propane [commonly named Bisphenol A]. A part or all of the Bisphenol A may be substituted by other bisphenols. Examples of bisphenols except Bisphenol A include compounds such as hydroquinone; 4,4'-dihydroxydiphenyl; bis(4-hydroxyphenyl)alkane; bis(4-hydroxyphenyl) cycloalkane; bis(4-hydroxyphenyl) bis(4-hydroxyphenyl)sulfide; sulfone; bis(4-hydroxyphenyl)sulfoxide; bis(4-hydroxyphenyl)ether; and halogenated bisphenols such as bis(3,5-dibromo-4-hydroxyphenyl) propane and bis(3,5-dichloro-4-hydroxyphenyl)propane. The above dihydric phenol may be a homopolymer of a dihydric phenol, a copolymer of at least two dihydric phenols or a blend thereof. The polycarbonate resin of the present invention may be a thermoplastic random branched polycarbonate resin obtained by reacting a polyfunctional aromatic compound with a dihydric phenol and/or a carbonate precursor.

In the polycarbonate resin of the present invention, the viscosity average molecular weight is preferably 10,000 to 100,000, most preferably 15,000 to 40,000, considering the mechanical property and moldability.

The ABS resin of the present invention is a grafted polymer obtained by polymerizing styrene and acrylonitrile in the presence of a conjugated diene rubber through a known polymerization method such as emulsion polymerization method, bulk polymerization method, bulk-suspension polymerization method, emulsion-suspension polymerization method. Thus obtained grafted polymer may contain an ungrafted polymer generated in the graft polymerization process or a copolymer of the above compounds which are prepared separately.

The ABS resin of the present invention comprises 35 - 70% by weight of a conjugated diene rubber, ≥ 20 by weight of styrene and ≥ 10 by weight of acrylonitrile. The conjugated diene rubber constituting the ABS resin includes a polybutadiene, butadiene-styrene copolymer, butadiene-acrylonitrile copolymer, polyisoprene and combination thereof. The components to be grafted are limited to only styrene and acrylonitrile, because other components such as alpha-methylstyrene are not suitable due to the deterioration of the impact strength of the grafted resin.

Although a glass transition temperature (Tg) of rubber component generally depends on the composition of the rubber, the Tg caused by the main rubber component of the present invention is up to -65°C. In this case, the main rubber component means the rubber component itself, in the use of a single component (for example, in the use of only a polybutadiene or only a butadiene-styrene copolymer), while the main rubber component means the one rubber component amounting to at least 50% by weight in the total rubber components in the use of at least two rubber components (for example, in the use of both a polybutadiene and a butadiene styrene copolymer at the same time). If 100% of polybutadiene is used, the Tg is lower than -70°C. In a butadiene-styrene copolymer, as the amount of styrene to be copolymerized is increased, the Tg will increase. Accordingly, If butadiene-styrene copolymer is used as the main component, it is necessary to adjust the amount of the styrene so that the Tg may be up to -65 °C. In case that Tg of the main rubber component is higher than -65°C, the low temperature impact characteristics of the PC/ABS resin composition are decreased.

The proportion of the above conjugated diene component is preferably 35 to 70% by weight, more preferably 40 to 65% by weight. If the proportion is less than 35% by weight, the obtained PC/ABS resin composition does riot show good plating performance (plating deposition stability in a conventional plating process for ABS resin) and deteriorates the low temperature impact strength. If the proportion of the rubber component is more than 70% by weight, the heat resistivity and stiffness of the PC/ABS resin composition are decreased, which is not desirable.

Regarding the proportions of a polycarbonate resin and an ABS resin to be blended, the proportion of the polycarbonate resin in the PC/ABS resin composition should be 63 to 78% by weight. If the proportion of the polycarbonate resin is less than 63% by weight, the impact strength, mechanical property and heat resistivity of the composition are decreased and in particular, the performances required for the door handle or door knob of a car are lowered. On the contrary, if the proportion of the polycarbonate resin is more than 78%, the plating performance (deposition stability of plating) and fluidity are decreased, which is not desirable.

Furthermore, in the characteristics of the PC/ABS resin composition for raising the reliability of practical strength, particularly the Izod strength at -30°C according to JIS K-7110 is preferably at least 45kg·cm/cm (1/8 in. with notch), and various components are mixed preferably in such a ratio that the above performances are sufficient. It is preferred that the flow-value is at least 3.0 x 10⁻²ml/sec under the following conditions: 260°C, 100kg/cm², an orifice diameter of 1 mm and L/D = 10 according to JIS K-7210 reference method. If the flow value is less than 3.0 x 10⁻²ml/sec, the fluidity may be insufficient and there may be trouble in injection molding of the articles such as the door handle or door knob of a car. As the physical properties of the materials to be used for the door handle of a car, it is preferred that heat distortion temperature, HDT (at higher load) according to JIS K-7207, is at least 110°C and that tensile strength according to JIS K-7203 is at least 510 kg/cm².

The shaped article made of the above PC/ABS resin composition can be plated in a conventional plating unit for conventional ABS resin. The plated products exhibits a superior plating-adhesivity and a high strength, which is suitable for the door handle and door knob of a car.

The present invention will be described below in more detail with Examples and Comparative Examples.

### Examples 1 - 5 and Comparative Examples 1 - 6 :

As the starting material, polycarbonate resin (trade name: Toughlon A2200, made by Idemitsu Petrochemical Co., Ltd.) and each of ABS resins as shown in Table 1 (ABS-1 ∼ABS-7) were used.

PC/ABS resin compositions were prepared according to the ratios shown in Table 2.

Each of ABS resins was prepared as follows.

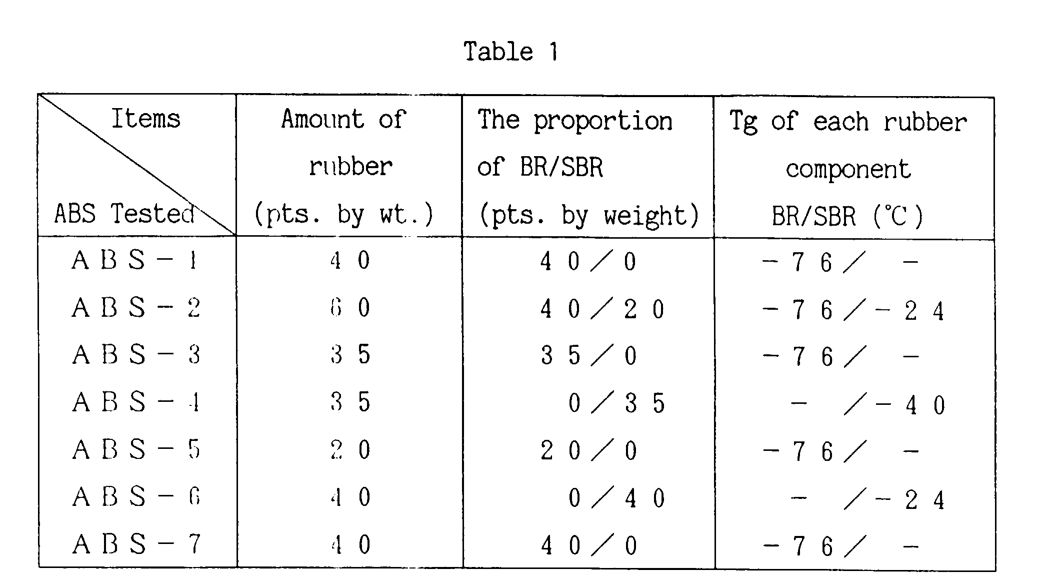

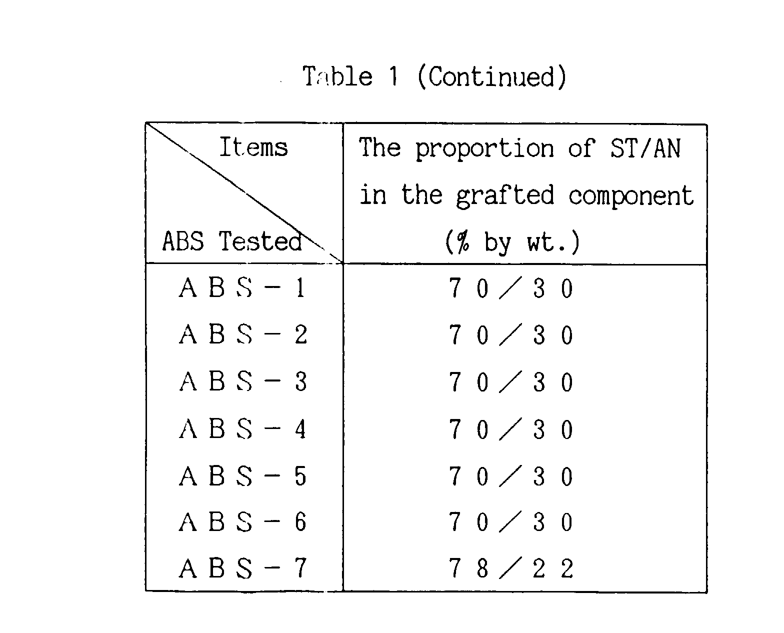

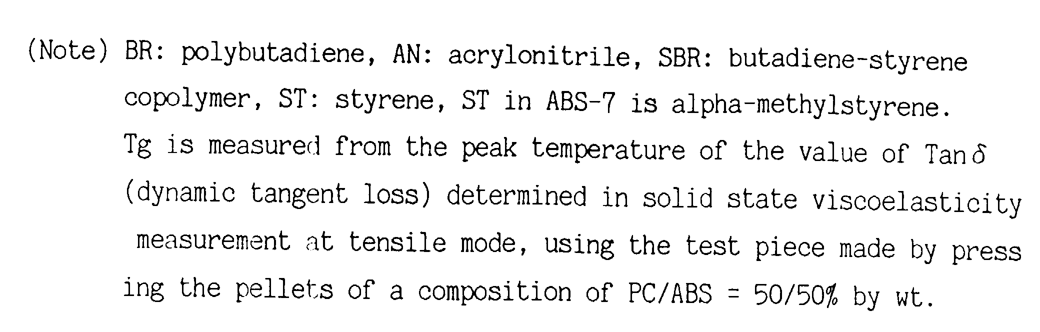

**Table 2**

| | Composition (% by weight) | | |
|---|---|---|---|
| | P C | A B S | Sample of A B S used |
| Example 1 | 7 0 | 3 0 | A B S-1 |
| Example 2 | 7 0 | 3 0 | A B S - 2 |
| Example 3 | 7 0 | 3 0 | A B S - 3 |
| Example 4 | 7 8 | 2 2 | A B S-1 |
| Example 5 | 6 3 | 3 7 | A B S - 1 |
| Comparative Example 1 | 5 5 | 4 5 | A B S-1 |
| Comparative Example 2 | 8 5 | 1 5 | A B S - 1 |
| Comparative Example 3 | 7 0 | 3 0 | A B S - 4 |
| Comparative Example 4 | 7 0 | 3 0 | A B S - 5 |
| Comparative Example 5 | 7 0 | 3 0 | A B S - 6 |
| Comparative Example 6 | 6 3 | 3 7 | A B S - 7 |

The mixture of styrene(ST) and acrylonitrile (AN) in the ratio shown in Table 1 was emulsion polymerized in the presence of a polybutadiene (BR) and/or a butadiene-styrene copolymer (SBR). The grafted copolymer obtained was coagulate with sulfuric acid, neutralized with sodium hydroxide, then washed and dried to obtain powdery ABS resin.

The above polycarbonate resin and each of ABS resins were mixed in the ratio shown in Table 2, blended at melt and extruded by a single screw extruder of a 50mm screw diameter with a vent port to make pellets. From the pellets, the specified test pieces and door handles (length of 15cm, with the handle and the base part) were molded by an injection molding machine with a vent port at 260 °C and were evaluated as follows.

Each of physical properties is determined by the following methods.
- Tensile strength:: measured according to JIS K-7203
- Izod impact strength:: measured according to JIS K-7110 (thickness: 1/8 inches, with notch, determined in a thermostat kept at -30°C).
- HDT (heat distortion temperature) :: measured according to JIS K-7210 reference method (load: 18.6 kg/cm²; thickness: 1/8 inches).
- Flow value:: measured according to JIS K-7210 reference method, (260 °C, load: 100kg/cm², orifice diameter: 1 mm and L/D : 10).
- Impact strength of door handle in weight-dropping (Weight-dropping test):: The door handle is fixed on a jig so that the handle and the base may be upside down, and the handle is opened. When a weight of 5kg was dropped on the specimen from height of 20cm, the feature and deformation of damage of the specimen was observed by the naked eye.
- Deposition stability of plating:: A test piece (plate: 80 x 80 x 3 mm) is plated in the process as shown in Table 3, Non-plated area is observed by the naked eye.

**Table 3**

| Process | | Method | Bath Temperature (°C) | Time (min) |
|---|---|---|---|---|
| 1. | Degreasing | Commercial degreaser | 50 | 3 |
| 2. | Washing with water | | | |
| 3. | Etching | CrO₃ 400g/ℓ H₂SO₄ 400g/ℓ | 70 | 15 |
| 4. | Washing with water | | | |
| 5. | Neutraliziation- | HCl 10ml/ℓ | room | 2 |
| | reduction | H₂O₂ 10ml/ℓ | temperature | |
| 6. | Washing with water | | | |
| 7. | Catalyzing | HCl 100ml/ℓ Enilex CT** 50ml/ℓ | 35 | 3 |
| 8. | Washing with water | | | |
| 9. | Accelerating | H₂SO₄ (HCl) 100ml/ℓ | 35 | 2 |
| 10. | Washing with water | | | |
| 11. | Chemical nickel plating * | NiSO₄, reduction agent, complexing agent, stabilizer | 40 | 5 |
| 12. | Washing with water | | | |
| 13. | Conditioning | PDC** 10ml/ℓ H₂SO₄ 30ml/ℓ | room temperature | 0.5 |
| 14. | Copper sulfate plating | UBAC-EP** 3A/dm² | room | 55 |
| | treatment | | temperature | |
| 15. | Washing with water | | | |
| 16. | Semi-bright nickel | BTL** 4A/dm² | 50 | 20 |
| | plating | | | |
| 17. | Bright nickel plating | #66** 4A/dm² | 50 | 20 |
| 18. | Special nickel | Jule** 4A/dm² | 50 | 1 |
| | plating | | | |
| 19. | Washing with water | | | |
| 20. | Chromium plating | K-40** 15A/dm² | 40 | 3 |
| 21. | Washing with water | | | |
| 22. | Drying | | | |

| | | | | |
|---|---|---|---|---|
| * pH : 8.5 - 9.5, adjusted by aqueous ammonia | | | | |
| ** Made by Ebara Yujilight KK. Electroplating was carried out under conditions providing 20 microns for copper, 20 microns for nickel and 0.3 microns for chromium, respectively. | | | | |

**Table 4**

| | Evaluated performances | | | | | | |
|---|---|---|---|---|---|---|---|
| | Deposition stability tion of plating | Tensile strength (kg/cm²) | Izod impact strength (-30°C) (kg-cm/cm) | Heat distortion temperature (°C) | Flow value (ml/sec) | Weight dropping test | |
| | | | | | | -30°C | 80°C |
| Example 1 | ○ | 580 | 55 | 118 | 3.4x10⁻² | ○ | ○ |
| Example 2 | ○ | 550 | 53 | 112 | 3.6x10⁻² | ○ | ○ |
| Example 3 | ○ | 590 | 50 | 120 | 4.0x10⁻² | ○ | ○ |
| Example 4 | ○ | 600 | 58 | 122 | 3.1x10⁻² | ○ | ○ |
| Example 5 | ○ | 540 | 48 | 114 | 5.0x10⁻² | ○ | ○ |
| Comparative Example 1 | ○ | 500 | 42 | 107 | 4.6x10⁻² | ○ | X∗² |
| Comparative Example 2 | X | 620 | 35 | 125 | 2.8x10⁻² | ○ | ○ |
| Comparative Example 3 | ○ | 600 | 25 | 119 | 5.8x10⁻² | X∗¹ | ○ |
| Comparative Example 4 | X | 590 | 20 | 120 | 7.0x10⁻² | X∗¹ | ○ |
| Comparative Example 5 | ○ | 580 | 15 | 118 | 4.5x10-2 | X∗¹ | ○ |
| Comparative Example 6 | ○ | 600 | 25 | 125 | 3.5x10⁻² | X∗¹ | ○ |
| Deposition stability of plating; ○: Non-plated area was not observed ×: Non-plated area was observed Weight dropping test for door handle; ○: Breakage and deformation were not observed at 100 kg · cm ×*¹: Breakage was observed at 100 kg · cm ×*²: Deformation was observed at 100 kg·cm. | | | | | | | |

## Claims

1. Use of a plated product made from a resin composition comprising
- 63 to 78 % by weight of a polycarbonate resin, and
- 22 to 37 % by weight of a acrylonitrile-butadiene-styrene resin,
- wherein said acrylonitrile-butadiene-styrene resin comprises
- 35 to 70% by wt. of one single or at least two conjugated diene rubbers, grafted with
- ≥ 20 % by weight of styrene and
- ≥ 10 % by weight of acrylonitrile,
- and the glass transition temperature of the single conjugated diene rubber component or in case that at least two conjugated diene rubber components are present the glass transition temperature of the main rubber component amounting to at least 50% by wt. of the total weight of the rubber components is up to -65°C
as a door handle or door knob for a car.

2. A use of claim 1, wherein said conjugated diene rubber is contained in amount of 40 to 65% by weight in said acrylonitrile-butadiene-styrene resin.

3. A use of claim 1, wherein said polycarbonate resin has a viscosity average molecular weight of 10,000 to 100,000.

4. A use of claim 3, wherein said polycarbonate resin has a viscosity average molecular weight of 15,000 to 40,000.

5. A use of claim 1, wherein said resin composition has an Izod impact strength of at least 45kg·cm/cm (determined under conditions of -30°C and 1/8 inches thickness with notch, according to JIS K-7110).

6. A use of claim 1, wherein said resin composition has a flow value of at least 3.0 x 10⁻²ml/sec (determined under conditions of 260°C, 100 kg/cm² load, 1 mm orifice diameter and L/D of 10, according to JIS K-7210 reference method).

7. A use of claim 1, wherein said plated product is plated in a plating line.

## Patentansprüche

1. Verwendung eines beschichteten Produktes, hergestellt aus einer Harzzusammensetzung, die umfaßt:
- 63 bis 78 Gew.-% eines Polycarbonatharzes, und
- 22 bis 37 Gew.-% eines Acrylnitril-Butadien-Styrol-Harzes,
- worin das Acrylnitril-Butadien-Styrol-Harz
- 35 bis 70 Gew.-% eines einzelnen konjugierten Dien-Kautschuks oder mindestens zwei konjugierte Dien-Kautschuke, die jeweils mit
- ≥ 20 Gew.-% Styrol und
- ≥ 20 Gew.-% Acrylnitril gepfropft sind, umfaßt,
- und worin die Glasübergangstemperatur der einzelnen konjugierten Dien-Kautschuk-Komponente oder, im Falle, daß mindestens zwei konjugierte Dien-Kautschuk-Komponenten vorhanden sind, die Glasübergangstemperatur der Kautschuk-Hauptkomponente, die in einer Menge von mindestens 50 Gew.-% des Gesamtgewichtes der Kautschuk-Komponenten vorhanden ist, bis hinauf auf -65°C beträgt,
als Türgriff oder Türknopf bzw. -knauf eines Autos.

2. Verwendung nach Anspruch 1, worin der erwähnte konjugierte Dien-Kautschuk in einer Menge von 40 bis 65 Gew.-% in dem erwähnten Acrylnitril-Butadien-Styrol-Harz enthalten ist.

3. Verwendung nach Anspruch 1, worin das erwähnte Polycarbonatharz ein viskositätsmittleres Molekulargewicht von 10000 bis 100000 besitzt.

4. Verwendung nach Anspruch 3, worin das erwähnte Polycarbonatharz ein viskositätsmittleres Molekulargewicht von 15000 bis 40000 besitzt.

5. Verwendung nach Anspruch 1, worin die Harzzuammensetzung eine Kerbschlagzähigkeit nach Izod von mindestens 45 kg • cm/cm (bestimmt unter den Bedingungen von -30°C und 1/8 Zoll Dicke mit Kerbe gemäß JIS K-7110).

6. Verwendung nach Anspruch 1, worin die erwähnte Harzzusammensetzung eine Fließwert von mindestens 3,0 x 10⁻² ml/ sek. besitzt (bestimmt unter den Bedingungen 260°C, 100 kg/cm² Belastung, 1 mm Düsendurchmesser und einem L/D von 10, gemäß JIS K-7210, Referenzverfahren).

7. Verwendung nach Anspruch 1, worin das plattierte Produkt in einer Plattierungsanlage belegt wird.

## Revendications

1. Utilisation d'un produit plaqué, fabriqué à partir d'une composition de résine comportant :
- de 63 à 78 % en poids d'une résine polycarbonate, et
- de 22 à 37 % en poids d'une résine de type acrylonitrile-butadiène-styrène,
- ladite résine de type acrylonitrile-butadiène-styrène comportant :
- de 35 à 70 % en poids d'un caoutchouc diène conjugué unique ou d'au moins deux caoutchoucs diène conjugué, greffés avec :
- 20 % ou plus en poids de styrène et
- 10 % ou plus en poids d'acrylonitrile,
- et la température de transition vitreuse du composant de type caoutchouc diène conjugué unique ou dans le cas où au moins deux composants de type caoutchouc diène conjugué sont présents, la température de transition vitreuse du composant principal de type caoutchouc atteignant au moins 50 % en poids du poids total des composants de type caoutchouc, va jusqu'à -65°C,
sous la forme d'une poignée de porte ou d'un bouton de porte pour une automobile.

2. Une utilisation selon la revendication 1, dans laquelle ledit caoutchouc diène conjugué est présent en une quantité de 40 à 65 % en poids dans ladite résine de type acrylonitrile-butadiène-styrène.

3. Une utilisation selon la revendication 1, dans laquelle ladite résine polycarbonate présente un poids moléculaire moyen déterminé par mesure de la viscosité de 10 000 à 100 000.

4. Une utilisation selon la revendication 3, dans laquelle ladite résine polycarbonate présente un poids moléculaire moyen déterminé par mesure de la viscosité de 15 000 à 40 000.

5. Une utilisation selon la revendication 1, dans laquelle ladite composition de résine présente une résistance au choc Izod d'au moins 45 kg.cm/cm (déterminée sous des conditions de -30°C et une épaisseur de 1/8ème de pouce avec encoche, selon la norme JIS K-7110).

6. Une utilisation selon la revendication 1, dans laquelle ladite composition de résine présente un indice d'écoulement d'au moins 3,0 x 10⁻² ml/s (déterminé sous les conditions de 260°C, d'une charge de 100 kg/cm², d'un orifice de 1 mm de diamètre et d'un rapport L/D de 10, selon la technique de référence JIS K-7210).

7. Une utilisation selon la revendication 1, dans laquelle ledit produit plaqué est plaqué dans une chaîne de placage.
